# EUROPÄISCHE PATENTANMELDUNG

(11) **EP 0 528 755 A1**
(43) Veröffentlichungstag der Anmeldung: **24.02.1993**
(21) Anmeldenummer: 92810553.5
(22) Anmeldetag: 20.07.1992
(51) Int. Cl.: B65G 53/42

(54) **Vorrichtung zum Absaugen von Pulver**

(30) Priorität: 16.08.1991 CH 2416/91
(71) Anmelder: Frei, Siegfried, CH-9053 Teufen (CH)
(72) Erfinder: Frei, Siegfried, CH-9053 Teufen (CH)
(74) Vertreter: Gachnang, Hans Rudolf

(57) **Zusammenfassung**

Bei der Vorrichtung zum Absaugen von Pulver (38) aus einem Gebinde, z.B. einem Transportbehälter ist am Ende des Saugrohres (11) ein Vibrationsantrieb (23) mit nach unten ragenden Lamellen (33) befestigt. Die aus dem mit Druckluft angetriebenen Vibrationsantrieb (23) austretende entspannte Luft wird durch einen düsenförmigen Einsatz (27) an der Saugöffung des Saugrohres (11) in das abzusaugende Pulver (37) zwischen den Lamellen (33) eingeblasen.

## Beschreibung

Gegenstand der vorliegenden Erfindung ist eine Vorrichtung zum Absaugen von Pulver gemäss Oberbegriff des Patentanspruches 1.

Absaugvorrichtungen der genannten Gattung sind bekannt. Solche Absaugvorrichtungen werden insbesondere zum Absaugen von Pulver Getreide oder Granulaten aus Lager- oder Transportbehältern benutzt und bestehen aus einem vertikal in den Behälter einfahrbaren Saugrohr und um das Saugrohrende herum angeordneter Mittel zum Einblasen von Luft in das abzusaugende Gut vor der Saugöffnung des Saugrohres. Eine solche Vorrichtung wird beispielsweise in der US-Patentschrift 2,301,617 beschrieben.

Es ist weiter bekannt, insbesondere zum Absaugen von feinen und feinsten Pulvern, den Behälter auf einem Rüttelboden oder Vibrator aufzusetzen, um das darin gelagerte Gut leichter absaugbar zu machen.
Aus der europäischen Patentschrift 0 184 994 ist weiter eine Pulverabsaugvorrichtung bekannt, bei welcher am Ende des Saugrohres Druckluftschalldämpferelemente ringförmig um das Rohrende herum angeordnet sind und Druckluft in feinst verteilter Form in das Pulver im Bereich der Saugöffnung eingetragen wird.

Die bekannten Vorrichtungen haben den Nachteil, dass durch die Lagerung und/oder durch Feuchtigkeit etc., zusammengebackenes oder Klumpen aufweisendes Pulver nur noch mit Mühe dem Gebinde entnommen werden kann.

Hier will die Erfindung Abhilfe schaffen.

Die Erfindung, wie sie durch die kennzeichnenden Merkmale des Patentanspruches 1 beschrieben wird, löst die Aufgabe, eine einfache, insbesondere auch für Kleingebinde verwendbare Vorrichtung zu schaffen, welche das Absaugen von verfestigten oder knolligen Pulvern ermöglicht und mit einem Minimum an Energie betrieben werden kann.

Überraschenderweise gelingt es, mit dem im Bereich des Endes des Saugrohres angeordneten Vibrationsantrieb das Pulver im Bereich der Ansaugstelle und um diese herum zu lockern und fliess- und damit absaugfähig zu machen. Der zwischen dem den Vibrationsantrieb tragenden Ring und dem Saugrohr eingesetzte Schwingungsdämpfer verhindert die Übertragung von Schwingungen auf das Rohr und damit die Uebertragung von Geräuschen ausserhalb des Gebindes und zudem kann durch die geringe in Schwingung zu versetzende Masse mit einem Minimum an Energie gearbeitet werden. Die nach unten ragenden, am Ring befestigten Lamellen lösen das abzusaugende Gut im Bereich der Saugöffnung auf, setzen es in hochfrequente Bewegung und ermöglichen ein leichtes Absaugen. Die an den Lamellen angebrachten Rippen und/oder Federn erhöhen die Wirkung der Schwingungen der Lamellen und fördern, falls die Rippen geneigt angeordnet sind, das aufgelockerte Gut direkt vor die Absaugöffnung. Der mit Druckluft betriebene Vibrationsantrieb weist eine geringe Störungsanfälligkeit auf und ist ungefährlich bei der Handhabung. Brennbare Pulver können durch Defekte des Antriebes nicht entzündet werden. Die aus dem Antrieb austretende, entspannte Druckluft kann anschliessend direkt zur Fluidisierung des aufgelockerten Materiales verwendet werden. Die durch den Vibrationsantrieb in das abzusaugende Pulver eingebrachte Luftmenge ist äusserst gering und wird grösstenteils von der Pulverabsaugung dem Gebinde wieder entzogen. Spezielle Abluftreinigungsanlagen, wie sie bei herkömmlichen Blasvorrichtungen oder Behältern mit porösen Böden benötigt werden, fallen dahin.

Anhand eines illustrierten Ausführungsbeispieles wird die Erfindung näher erläutert. Es zeigen:
Fig. 1 einen trommelförmigen Behälter (teilweise aufgeschnitten) mit einer Absaugvorrichtung,
Fig. 2 einen Längsschnitt durch die Absaugvorrichtung, längs Linie II-II in Figur 3,
Fig. 3 einen Querschnitt durch die Absaugvorrichtung, längs Linie III-III in Figur 2,
Fig. 4 eine schematische Darstellung einer weiteren Ausführungsform,
Fig. 5 einen Längsschnitt durch eine weitere Ausführungsform und
Fig. 6 einen Querschnitt durch die Absaugvorrichtung längs Linie VI-VI in Figur 5.

Ein Gebinde 1 mit einem Mantel 3 und einem Boden 5 ist oben durch einen abnehmbaren Deckel 7 verschlossen. Durch eine Öfftung 9 im Deckel 7 ist das Saugrohr 11 und eine Druckluftleitung 13 einer Absaugvorrichtung 15 hindurchgeführt. Das Saugrohr 11 ist mit der Absaugvorrichtung 15 in Richtung der Pfeile A heb- und senkbar.
Am unteren Ende 17 des Saugrohres 11 ist ein Ring 19 aufgesetzt und mittels einem Schwingungsdämpfer 21 aus Gummi oder dergleichen mit dem Saugrohr 11 verbunden. Der Schwingungsdämpfer 21 kann einen kreisringförmigen Querschnitt aufweisen oder aus einzelnen an der Peripherie des Saugrohres 11 angeordneten Kreisringabschnitten bestehen. Auf dem Ring 19, der vorzugsweise aus Metall gefertigt ist, sitzt ein Vibrationsantrieb 23. Der Vibrationsantrieb 23 kann durch einen Elektromotor oder durch einen Pneumatikmotor über die Druckluftleitung 13 angetrieben werden. Die aus dem Pneumatikmotor austretende enspannte Luft wird über eine Leitung 25 in einen in das untere Ende 17 eingeschobenen sternförmigen Einsatz 27 geleitet. Der Einsatz 27 weist im Zentrum eine Bohrung 29 für den Durchtritt der vom Antrieb 23 kommenden Druckluft auf. Radiale Rippen 31 stützen den Einsatz 27 an den inneren Wänden des Rohres 11 ab. Anstelle eines in das Rohrende 17 eingeschobenen Einsatzes 27 kann selbstverständlich auch ein solcher verwendet werden, der auf das Rohrende 17 aufgesetzt ist. Wenn der Rüttel- oder Vibrationsantrieb 23 durch einen Elektromotor erfolgt, wird die Druckluft aus dem Fabriknetz oder über einen separaten Kompressor zugeführt.

An der Unterseite den Ringes 19 sind sternförmig zur Achse B des Saugrohres 11 Lamellen 33 befestigt. Die Lamellen 33 sind an ihrem Ende vorzugsweise verjüngt und können auf der Oberfläche Rippen 35 oder 37 aufweisen. Die Rippen 35 verlaufen geneigt zur Horizontalen; die Rippen 37 parallel zur Achse B.

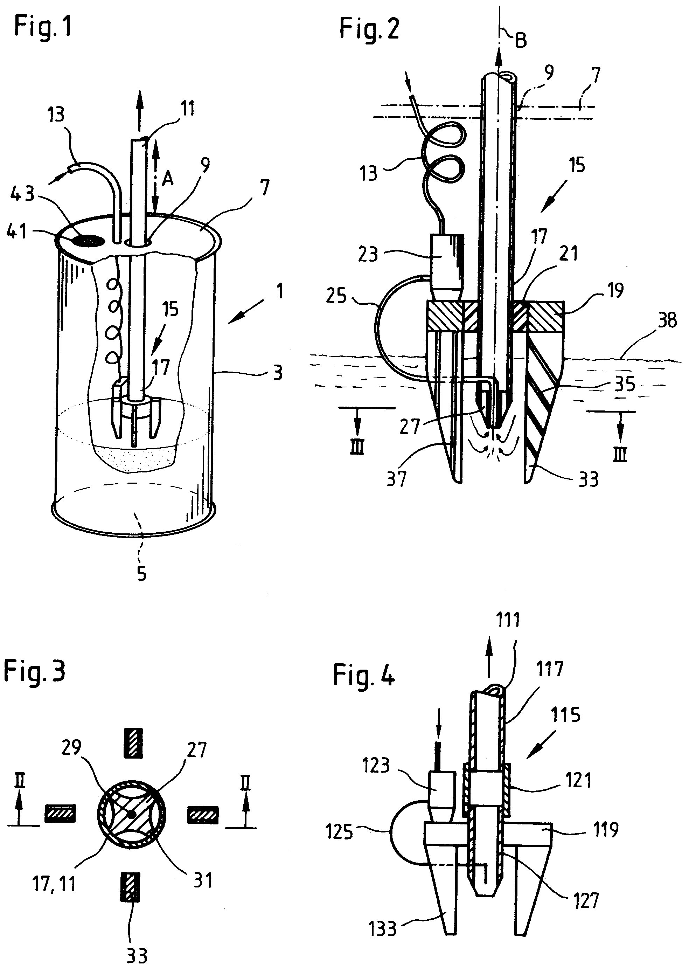

In Figur 4 ist eine weitere Ausgestaltung der Erfindung schematisch dargestellt. Die Absaugvorrichtung 115 ist dort als autonome Einheit auf das Ende 117 der Absaugleitung 111 mittels eines schlauchförmigen, schwingungsdämpfenden Elementes 121 aufgesetzt. Der Vibrationsantrieb 123 sitzt auf einem Ring 119, an dessen Unterseite Lamellen 133 befestigt sind und in dessen Zentrum der Einsatz 127 angeordnet ist. Die aus dem Antrieb 123 austretende und entspannte Luft wird, wie im Beispiel gemäss den Figuren 1 bis 3, durch eine Leitung 125 dem Einsatz 127 zugeleitet.

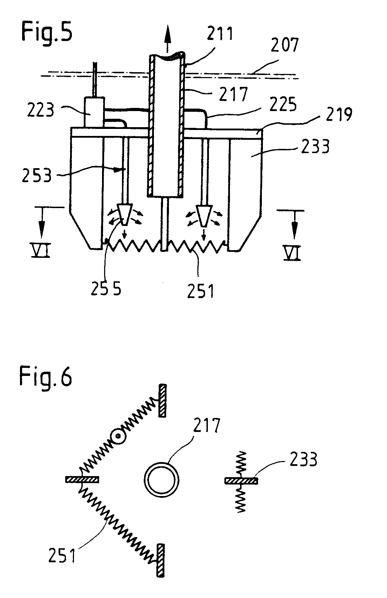

Zur Vergrösserung des fluidisierten Bereiches können zwischen den Lamellen 233 der in den Figuren 5 und 6 dargestellten Ausgestaltung der Erfindung zusätzlich Mittel 253 zum Einführen von Luft in den von den Lamellen 233 aufgerüttelten Pulverbereich vorgesehen sein. Als Luftzuführmittel werden vorzugsweise Druckluftschalldämpfer 255 verwendet, wie sie zur Schalldämmung über den Luftaustritt an pneumatischen Werkzeugen aufgesetzt sind. Diese Druckluftschalldämpfer bestehen entweder aus einer gesinterten Metallmasse oder aus porösem Kunststoff und sind im Handel erhältlich. Die Luftzuführmittel sind vorzugsweise kreis- oder sternförmig um den Bereich unterhalb der Saugöffnung des Absaugrohres 217 angeordnet, um vor der Saugöffnung eine hohe Fluidisierung im abzusaugenden Material zu erzeugen und um zu verhindern, dass durch die Mittel 253 in das abzusaugende Gut eingebracht Luft in diesem aufsteigt. Die Versorgung mit Druckluft erfolgt bei Verwendung eines pneumatischen Vibrationsantriebes 223 durch dessen Abluft; bei Verwendung eines elektrischen Vibrationsantriebes wird die nötige Druckluft separat durch die Leitungen 225 zugeführt.
Zum mechanischen Einleiten von Schwingungen in das abzusaugende Material können an den Lamellen 233 schraubeförmige oder in Zickzackform hergestellte Federn 251 angebracht sein. Die Federn 251 können entweder zwei Lamellen 233 miteinander verbinden (Fig.6, linke Seite) oder nur einseitig an den Lamellen 233 befestigt sein (Fig.6, rechte Seite). Die Federn 251 übertragen die Schwingungen von den Lamellen 233 in das abzusaugende Gut, ohne dieses zu zerschlagen und dadurch deren Siebkurve oder Oberflächenbeschaffenheit zu verändern.

Im folgenden wird die Funktionsweise der Vorrichtung zum Absaugen von Pulver erläutert. Aus dem Fabriknetz wird Druckluft zum Antriebsmotor 23, 123 geführt und setzt dort eine darin eingesetzte Unwucht in Bewegung. Die von der Unwucht verursachten Schwingungen werden auf den Ring 19, 119, 219 übertragen und an die Lamellen 33, 133, 233 weitergegeben. Die schwingenden Lamellen 33, 133, 233 lockern das sie umgebende Pulver 38 auf und die aus dem Vibrationsantrieb 23, 123, 223 austretende entspannte Luft, welche durch den Einsatz 27, 127 oder die Druckluftschalldämpfer 255 zwischen den Lamellen 33, 133 austritt, kann in das aufgelockerte Pulver eindringen und dieses Fluidisieren. Das nun fliessfähige Pulver kann mit geringem Unterdruck durch die Leitung 11, 111 abgesaugt werden. Die Absaugung wird unterstützt durch den von der entspannten Luft aus dem Vibrationsantrieb 23, 123, 223 aufgebauten Überdruck im Behälter 1.
Bei der Ausführung nach den Figuren 1 bis 3 wird der Ring 19 mit den Lamellen 33 in Schwingung versetzt. Bei der Ausführungsform nach Figur 4 wird der Einsatz 127 zwischen den Lamellen 133 ebenfalls in Schwingung versetzt. In beiden Ausführungsformen werden die Schwingungen dank der Schwingungsdämpfelemente 21, 121 nur in äusserst geringem Masse auf das Absaugrohr 11,111 und damit auf den Deckel 7 des Gebindes 1 übertragen. Wenn an den Lamellen 33, 133 geneigte Rippen 35 angebracht sind, so wird das aufgelockerte Pulver 38 zur Achse B hin gefördert. Die ganze Vorrichtung gräbt sich durch die Vibration und Absaugung sukzessive und entsprechend der entnommenen Pulvermenge in das Pulver ein.
Im Deckel 7 kann zusätzlich eine Oeffnung 41 angebracht sein, welche durch eine Filtermatte 43 überspannt ist und den Austritt von Luft aus dem Gebinde 1 erlaubt.

Die erfindungsgemässe Vorrichtung wird auf die Oberfläche des Pulvers im Gebinde aufgesetzt und gräbt sich, sobald der Vibrationsantrieb eingeschaltet wird, von selbst in dieses ein. Falls die Lamellen an einer geschlossenen Platte befestigt sind, sinkt die Vorrichtung nur gerade bis zur Oberfläche des abzusaugenden Gutes ein und mit zunehmender Entleerung des Gebindes nach unten.

## Patentansprüche

1. Vorrichtung zum Absaugen von Pulver aus einem Gebinde mit einem von oben in das Gebinde einführbaren Saugrohr und einer Druckluftzuleitung, dadurch gekennzeichnet, dass im Bereich des Endes (17,117,217) des Saugrohres (11,111,211) ein Vibrationsantrieb (23,123,223) und mindestens ein Paar nach unten ragende Lamellen (33, 133,233) befestigt sind.

2. Vorrichtung nach Anspruch 1, dadurch gekennzeichnet, dass zwischen dem Vibrationsantrieb (23,123,223) und dem Saugrohr (11,111,211) ein Schwingungsdämpfer (21, 121,221) eingesetzt ist.

3. Vorrichtung nach Anspruch 2, dadurch gekennzeichnet, dass die Lamellen (33, 133,233) am Vibrationsantrieb (23,123,223) befestigt sind.

4. Vorrichtung nach einem der Ansprüche 1 bis 3, dadurch gekennzeichnet, dass die Lamellen (33, 133,233) sternförmig um das Ende des Saugrohres (11,111,211) herum und dieses axial nach unten überragend angeordnet sind.

5. Vorrichtung nach einem der Ansprüche 1 bis 4, dadurch gekennzeichnet, dass an den Lamellen (33,133,233) Rippen (33,35) angebracht sind.

6. Vorrichtung nach einem der Ansprüche 1 bis 5, dadurch gekennzeichnet, dass der Vibrationsantrieb (23, 123,223) mit Druckluft aus der Druckluftzuleitung (13,113,213) antreibbar ist.

7. Vorrichtung nach Anspruch 6, dadurch gekennzeichnet, dass die den Vibrationsantrieb (23, 123,223) verlassende, teilweise entspannte Druckluft durch eine am Ende des Saugrohres (11,111,211) angeordnete Blasleitung (13,113,213) in das unter dem Saugrohr (11,111,211) befindliche, von den Lamellen (33,133,233) in Schwingung versetzte Pulver (38) einblasbar ist.

8. Vorrichtung nach einem der Ansprüche 1 bis 7, dadurch gekennzeichnet, dass zwischen den Lamellen (233) Mittel (253) zum Einbringen von feinst verteilter Luft eingesetzt sind.

9. Vorrichtung nach Anspruch 8, dadurch gekennzeichnet, dass die Mittel (253) aus Druckluftschalldämpfern (255) bestehen und unterhalb der Ansaugöffnung des Saugrohres (211) angeordnet sind.

10. Vorrichtung nach einem der Ansprüche 1 bis 9, dadurch gekennzeichnet, dass an den Lamellen (233) und/oder an einem die Lamellen (233) tragenden Ring (19) oder der Platte (207) Federn (251 ) befestigt sind.
